# EUROPEAN PATENT SPECIFICATION

(11) **EP 2 741 557 B1**
(45) Date of publication and mention of the grant of the patent: **08.11.2017**
(21) Application number: 12837332.1
(22) Date of filing: 06.07.2012
(51) Int. Cl.: H04W 60/02

(54) **PROCESSING DEVICE, COMMUNICATION SYSTEM, COMMUNICATION TERMINAL, METHOD FOR CONTROLLING TERMINAL DEVICE, AND NON-TRANSITORY COMPUTER READABLE MEDIUM IN WHICH PROGRAM IS STORED**
VERARBEITUNGSVORRICHTUNG, KOMMUNIKATIONSSYSTEM, KOMMUNIKATIONSENDGERÄT, VERFAHREN ZUR STEUERUNG EINES ENDGERÄTS UND NICHTTRANSITORISCHES COMPUTERLESBARES MEDIUM MIT DARAUF GESPEICHERTEM PROGRAMM
DISPOSITIF DE TRAITEMENT, SYSTÈME DE COMMUNICATION, TERMINAL DE COMMUNICATION, PROCÉDÉ DE COMMANDE DE DISPOSITIF FORMANT TERMINAL ET SUPPORT NON TRANSITOIRE LISIBLE PAR UN ORDINATEUR DANS LEQUEL UN PROGRAMME EST ENREGISTRÉ

(30) Priority: 30.09.2011 JP 2011216428
(43) Date of publication of application: 11.06.2014
(73) Proprietor: NEC Corporation, Tokyo 108-8001 (JP)
(72) Inventor: GOTOU, Masami, Tokyo 108-8001 (JP); IWAI, Takanori, Tokyo 108-8001 (JP)
(74) Representative: Betten & Resch
(86) International application number: PCT/JP2012/004410
(87) International publication number: WO 2013/046506

(56) References cited:
- EP-A1- 2 464 180
- EP-A2- 1 223 777
- EP-A2- 1 278 387
- WO-A1-88/08238
- JP-A- 2002 165 260
- JP-A- 2003 023 655
- JP-A- 2003 204 572
- "Location update procedure for 802.16p system ; C80216p-10_0017", IEEE DRAFT; C80216P-10_0017, IEEE-SA, PISCATAWAY, NJ USA, vol. 802.16p, 30 December 2010 (2010-12-30), pages 1-7, XP017617646, [retrieved on 2010-12-30]
- INTEL: "Periodic LAU/RAU/TAU Optimizations for Signalling Congestion Control", 3GPP DRAFT; S2-103223_S2-103150_REV6, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Elbonia; 20100706, 15 July 2010 (2010-07-15), XP050458293, [retrieved on 2010-07-15]

## Description

### Technical Field

The present invention relates to a processing device, a communication system, a communication terminal, a terminal device control method, and a non-transitory computer readable medium storing a program.

### Background Art

In a mobile communication system, the number of terminals is increasing along with an increase in the number of terminals that perform M2M (Machine to Machine) communication and the like. In such a mobile communication system, user terminals are registered with a network in the unit called a tracking area so that the user terminals can transmit or receive a call in any cell. Therefore, each user terminal needs to perform a Tracking Area Update (TAU) on devices that manages the tracking areas. See Non Patent Literature 1 for the details of a procedure concerning TAU.

A mobile communication system by LTE (Long Term Evolution) of 3GPP (3rd Generation Partnership Project) shall be explained as an example. In the mobile communication system, there is a higher-level device of a base station (eNB) called an MME (Mobile Management Entity). The MME manages the tracking areas. A user terminal (UE) transmits its own location registration information to the MME via a base station (eNB).

Hereinafter, literature disclosing techniques related to TAU of a user terminal shall be explained. Patent Literature 1 discloses a location registration system that can reduce traffic between a mobile communication terminal and a location register. In the location registration system, when the mobile communication terminal stays in a particular location registration area, a location registration period of the mobile communication terminal is set longer than a predetermined period.

Patent Literature 2 discloses a mobile communication system that can improve efficiency of storage resources, such as location registration information, and facilities without harming user's convenience and serviceability.

Patent Literature 3 discloses a mobile communication system that avoids excessive execution of location registration due to an increase in the number of mobile terminals.

### Citation List

### Patent Literature

Patent Literature 1: Japanese Unexamined Patent Application Publication No. 2002-209247
Patent Literature 2: Japanese Unexamined Patent Application Publication No. 2005-45565
Patent Literature 3: Japanese Unexamined Patent Application Publication No. 2009-141855

### Non Patent Literature

Non Patent Literature 1: 3GPP TS23.401 version 10.4.0 Release 10 "LTE; General Packet Radio Service (GPRS) enhancements for Evolved Universal Terrestrial Radio Access Network (E-UTRAN) Access (3GPP TS 23.401 version 10.4.0 Release 10)" ETSI 2011-06

The document EP 1 223 777 A2 relates to a location registration system which comprises a mobile communication terminal and a location register for carrying out location registration of the mobile communication terminal. The location register comprises a storage section for storing the number of stays of the mobile communication terminal; a location registration period determination section for determining a period of location registration of the mobile communication terminal according to the number of stays of the mobile communication terminal stored in the storage section; and a location registration control section for transmitting the period of location registration determined by the location registration period determination section to the mobile communication terminal, receiving location information of the mobile communication terminal transmitted therefrom in response to the transmitted period of location registration, and carrying out location registration of the mobile communication terminal according to the received location information.

Further, the document "Location update procedure for 802.16p system; C80216p-10_0017", IEEE DRAFT; C80216P-10_0017, IEEE-SA, PISCATAWAY, NJ USA, 20101230, vol. 802.16p, PAGE 1 - 7 9 p. 3-4; relates to the location update procedure for the 802.16p system.

### Summary of Invention

### Technical Problem

There are various kinds of terminals using a mobile communication system (mobile communication network) because of the spread of M2M. Such terminals include a cellular phone and a terminal that does not move at all like, for example, a vending machine. Moreover, such terminals also include a terminal that communicates only at predetermined timings.

The terminals, such as the above-mentioned vending machine, transmit their own location information in a manner similar to that of the terminals such as a cellular phone. Therefore, the processing load concerning periodic registration of the location information could increase. That is, the processing load of the MME and the like could increase. Moreover, since the amount of the information concerning registration of the location information that is transmitted via a network is large, network congestion could be caused.

Although the techniques of Patent Literature 1 to 3 disclose that it is possible to set a value of a timer for a transmission period of the location information of the terminal, the communication period of the terminal has not been taken into consideration regarding the setting. Therefore, the terminal may still periodically transmit unnecessary location information.

That is, as the terminals cannot transmit the location information appropriately, there has been a problem that the processing load increases and the network is congested.

The present invention is made in light of the above-mentioned problem, and a main object is to provide a processing device, a communication system, a communication terminal, a terminal device control method, and a non-transitory computer readable medium storing a program that can reduce a network load concerning the registration of the location information.

### Solution to Problem

### The invention as defined in independent claims 1, 6, and 8-10.

An exemplary aspect of the present invention is a processing device that includes:
an analysis unit that obtains an index value from a message transmitted from a terminal device, in which the index value is set to a time longer than or equal to a communication period of the terminal device; and
a location notify period calculation unit that calculates, based on the index value, a setting time of a period for the terminal device to transmit location information to be longer than the communication period.

Another exemplary aspect of the present invention is a communication system that includes a terminal device and a processing device. The terminal device includes:
a transceiver unit that includes an index value in a registration message, notifies the processing device of the registration message, and receives a setting time of a period to transmit location information, in which the index value is set greater than or equal to the communication period of a local terminal; and
a location registration unit that periodically registers location information of the local terminal based on the setting time.

The processing device includes:
an analysis unit that obtains the index value from the registration message; and
a location notify period calculation unit that calculates, based on the index value, the setting time of the period for the terminal device to transmit the location information to be a value greater than the communication period;

Another exemplary aspect of the present invention is a communication terminal that includes:
a transceiver unit that notifies a mobility management device of an index value and receives a setting time of a period to transmit location information from the mobility management device, in which the index value is set to a time longer than or equal to a communication period of a local terminal; and
a location registration unit that periodically registers, based on the setting time, the location information of the local terminal with the mobility management device.

The setting time is a time longer than the index value.

Another exemplary aspect of the present invention is a method for controlling a terminal device that includes:
obtaining an index value from a message transmitted from a terminal device, the index value being set to a time longer than or equal to a communication period of the terminal device; and
calculating, based on the index value, a setting time of a period for the terminal device to transmit location information to be a value greater than the communication period.

Another exemplary aspect of the present invention is a non-transitory computer readable medium storing a program for causing a computer to execute the above-mentioned method.

### Advantageous Effects of Invention

The present invention can provide a processing device, a communication system, a communication terminal, a terminal device control method, and a non-transitory computer readable medium storing a program that can reduce a network load concerning registration of location information.

### Brief Description of Drawings

Fig. 1 is a block diagram showing a configuration of a communication network system according to a first exemplary embodiment;
Fig. 2 is a block diagram showing a configuration of an UE 10 according to the first exemplary embodiment;
Fig. 3 is a block diagram showing a configuration of an MME 30 according to the first exemplary embodiment;
Fig. 4 is a block diagram showing a configuration of an HSS 40 according to the first exemplary embodiment;
Fig. 5 is a sequence diagram showing a flow of an Attach procedure between the UE 10 and the MME 30 according to the first exemplary embodiment;
Fig. 6 is a flowchart showing a flow of calculation processing of a transmission period of location information by the MME according to the first exemplary embodiment;
Fig. 7 is a sequence diagram showing a flow of the Attach procedure between the MME 30 and the HSS 40 according to the first exemplary embodiment;
Fig. 8 is a flowchart showing a flow of calculation processing of a transmission period of location information by the MME 30 according to the first exemplary embodiment;
Fig. 9 is a block diagram showing an example of a hardware configuration of a computer system; and
Fig. 10 is a block diagram showing a configuration of the MME 30 according to the present invention.

### Description of Embodiments

### <First exemplary embodiment>

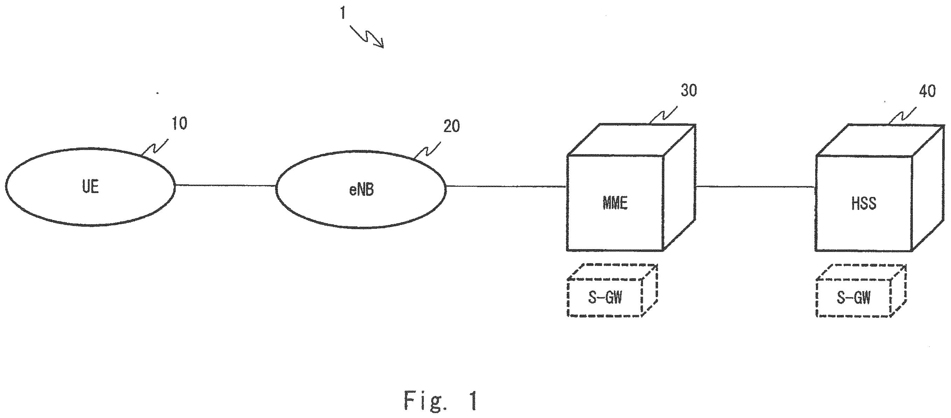

Hereinafter, an exemplary embodiment of the present invention shall be explained with reference to the drawings. Fig. 1 is a block diagram showing a configuration of a communication network system according to this exemplary embodiment. The communication network system 1 is a system supporting LTE (Long Term Evolution).

The communication network system 1 has a configuration including a terminal (User Equipment, hereinafter referred to as an "UE") 10, a base station (eNodeB, hereinafter referred to as "eNB") 20, a mobility management device (Mobility Management Entity, hereinafter referred to as an "MME") 30, and an HSS (Home Subscriber Server) 40. Note that although only one each of the respective devices is shown in the drawings, it is obvious that a plurality of the respective devices may exist. Usually, a plurality of UEs 10 exist in the communication network system 1.

The UE 10 performs periodic Tracking Area Updates (TAU) according to a setting value of a periodic TAU timer (transmission period of location information) that is set by the MME 30. That is, the UE 10 transmits its own location information to the MME 30 via the eNB 20 every time a time of the setting value of the periodic timer that has been set passes. Note that when the UE 10 performs communication processing before the time of the setting value of the periodic timer passes, the UE 10 resets counting processing of the period. For example, when 24 hours is set as the time of the setting value of the periodic timer and communication processing is performed after four hours from power-on have passed, the UE 10 starts new processing to count to 24 hours from the time when the communication is performed.

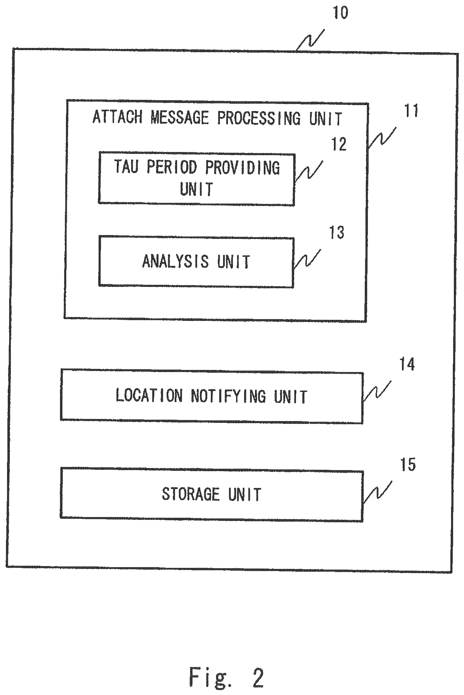

Further, the UE 10 transmits an index value of the periodic TAU timer (a value greater than or equal to a communication period) to the MME 30 at the time of an Attach procedure (a procedure to register the terminal with the communication network system 1). Note that an internal configuration and the details of the processing of the UE 10 and the above-mentioned index value will be explained later with reference to a block diagram of Fig. 2 (a block diagram of the UE 10).

The eNB 20 is a base station device that is compatible with an LTE network. The eNB 20 controls wireless communication with the UE 10 by a well-known technique.

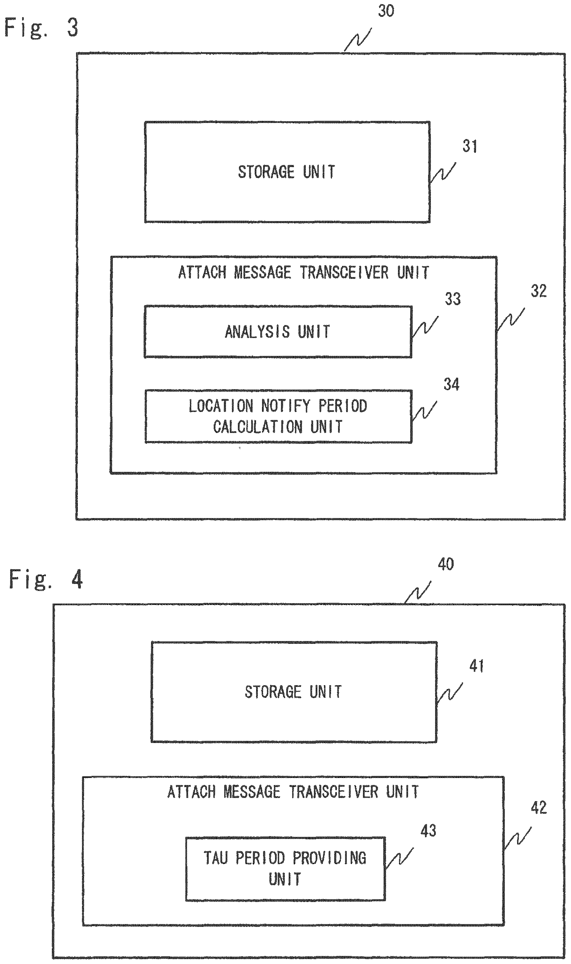

The MME 30 is a device that is introduced by EPC (Evolved Packet Core) and manages mobility. The MME 30 performs control (mobility control) concerning mobility management of the UE 10. In addition to the well-known mobility control, the MME 30 analyzes an Attach request from the UE 10 and evaluates whether or not the index value of the periodic TAU timer is included. When the index value of the periodic TAU timer is included, the MME 30 calculates, using the index value, the setting value of the periodic TAU timer which the UE 10 will be notified of. Moreover, the MME 30 may calculate the setting values of the periodic TAU timers which the respective UEs 10 will be notified of in response to an Attach message (Update Location Ask etc.) that is transmitted from the HSS 40. Note that an internal configuration, the details of the processing and the above-mentioned calculation processing of the MME 30 will be explained later with reference to a block diagram of Fig. 3 (a block diagram of the MME 30).

The HSS 40 is a device that holds a database for managing so-called subscriber information. To be more specific, the HSS 40 holds information and the like that is used for the mobility management of the respective UEs 10. In addition to holding the well-known information and communicating with the MME 30, the HSS 40 may transmit the index value of the periodic TAU timer of the UE 10 to the MME 30. Note that an internal configuration and the details of the processing of the HSS 40 will be explained later with reference to a block diagram of Fig. 4.

Next, the details of the UE 10 shall be explained with reference to Fig. 2. Fig. 2 is a block diagram showing the internal configuration of the UE 10. The UE 10 includes an Attach message processing unit 11, a location notifying unit 14, and a storage unit 15. The Attach message processing unit 11 includes a TAU period providing unit 12 and an analysis unit 13.

The Attach message processing unit 11 generates an Attach Request message in accordance with the standard specification described in Non Patent Literature 1 and the like and transmits the Attach Request message. Further, the Attach message processing unit 11 is a processing unit that analyzes a received Attach Accept message and the like.

The TAU period providing unit 12 is a processing unit that provides the index value of the periodic TAU timer to the created Attach Request message.

The index value of the periodic TAU timer is a value determined by the communication period of the UE 10, and in general, the communication period of the UE 10 may be used as the index value as is. For example, when the communication period of the UE 10 is once a day, the TAU period providing unit 12 provides an index value ("24 hours") to the created Attach Request message. Note that the communication period of the terminal that does not move like a vending machine is generally predetermined. The TAU period providing unit 12 provides the index value, for example, as a new parameter of the Attach Request message and transmits the Attach Request message.

Instead of using the communication period of the UE 10 as the index value as is, the TAU period providing unit 12 may add a certain margin value to the communication period and use it as the index value. For example, the TAU period providing unit 12 may add a uniform margin value ("30 minutes") to the communication period ("24 hours") of the UE 10 and use it as the index value.

The analysis unit 13 extracts the setting value of the periodic TAU timer that is provided by the MME 30 from the received Attach Accept message. The analysis unit 13 extracts the setting value of the periodic TAU timer and sets the setting value for the location notifying unit 14.

The location notifying unit 14 periodically notifies the MME 30 of the location information according to the setting value of the periodic TAU timer that has been set. That is, the location notifying unit 14 performs a so-called TAU procedure every time the time of the setting value of the periodic TAU timer passes. As mentioned above, the periodic TAU timer is set by the analysis unit 13.

Next, the details of the MME 30 shall be explained with reference to Fig. 3. Fig. 3 is a block diagram showing the internal configuration of the MME 30. The MME 30 includes a storage unit 31 and an Attach message transceiver unit 32. Note that the MME 30 includes, as appropriate, a processing unit or the like that performs the TAU procedure, although such a processing unit is not be shown in the drawings.

The storage unit 31 is a storage unit that stores a default value of the periodic TAU timer, the location information and the like of the respective UEs 10.

The Attach message transceiver unit 32 includes an analysis unit 33 and a TAU period calculation unit 34. The Attach message transceiver unit 32 is a processing unit that creates and transmits the Attach message to the UE 10 while receiving the Attach message from the UE 10. Moreover, the Attach message transceiver unit 32 exchanges the Attach messages (Update Location Ack etc.) with the HSS 40.

The analysis unit 33 analyzes the received Attach Request message or the Update Location Ack message and analyzes whether or not the index value of the periodic TAU timer of the UE 10 is set. When the index value of the periodic TAU timer is set, the analysis unit 33 notifies the location notify period calculation unit 34 of the index value. Note that when the index value of the periodic TAU timer is not set, the analysis unit 33 notifies the TAU period calculation unit 34 to that effect.

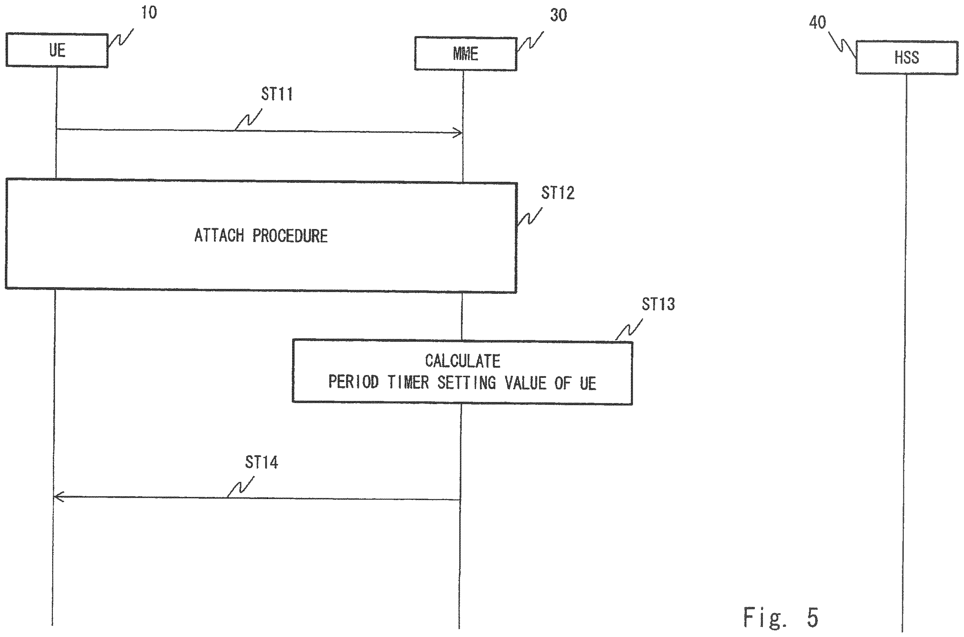

The TAU period calculation unit 34 is a processing unit that calculates the setting value of the periodic TAU timer of the UE 10 in response to a notification from the analysis unit 33. The TAU period calculation unit 34 sets a time longer than or equal to the notified index value or the default value as the setting value of the periodic TAU timer of the UE 10. The TAU period calculation unit 34 provides the calculated setting value to the Attach message. The calculation method shall be explained later with reference to Figs. 5 to 8.

Next, the details of the HSS 40 shall be explained with reference to Fig. 4. Fig. 4 is a block diagram showing the internal configuration of the HSS 40. The HSS 40 includes a storage unit 41 and an Attach message transceiver unit 42. The Attach message transceiver unit 42 includes a TAU period providing unit 43.

The storage unit 41 is a storage unit that holds the subscriber information of the respective UEs 10. The subscriber information could include information of the communication periods of the respective UEs 10.

The Attach message transceiver unit 42 is a processing unit that generates, transmits, and receives the Attach message (Update Location Ack etc. that is specified in Non Patent Literature 1) that is exchanged with the MME 30.

The TAU period providing unit 43 obtains, from the storage unit 41, the information on the communication period of the corresponding UE 10 at the time of generation of the Update Location Ack message. Next, the TAU period providing unit 43 calculates the index value which will be provided to the Update Location Ack message based on the obtained communication period. Note that, in general, the TAU period providing unit 43 uses the obtained communication period as the index value as is. The TAU period providing unit 43 sets the index value as a new parameter of the Update Location Ack message.

Note that the HSS 40 includes processing units (not shown in the drawings) that execute processing (e.g., management of the subscriber information) included in a normal HSS.

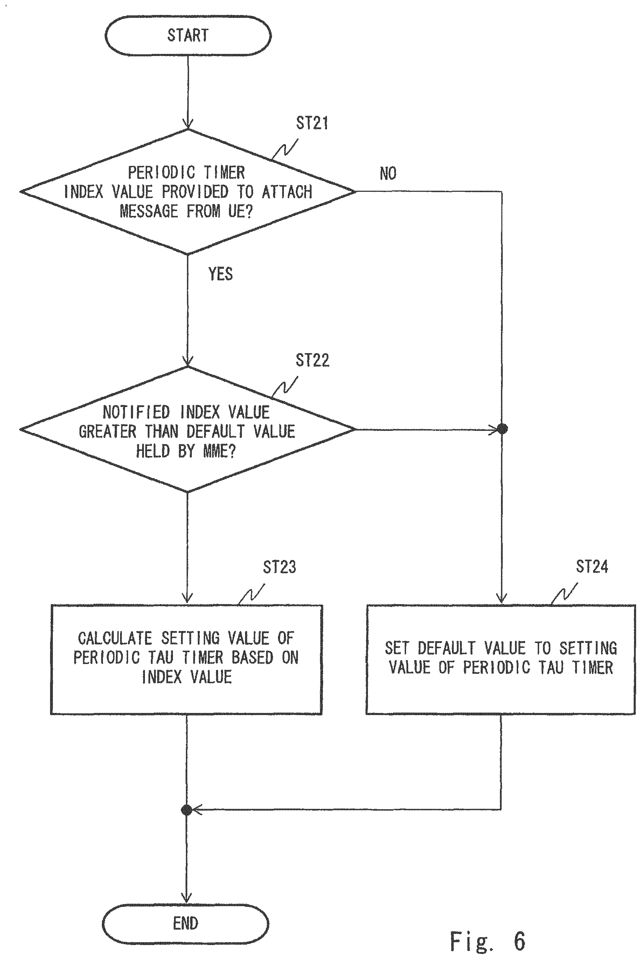

Next, the Attach procedure between the UE 10 and the MME 30 shall be explained with reference to Figs. 5 and 6. Fig. 5 is a sequence diagram showing a flow of the Attach procedure between the UE 10 and the MME 30. Fig. 6 is a flowchart showing a flow of the period calculation processing of TAU by the MME 30.

First, when the UE 10 registers with the communication network system 1, the UE 10 transmits the Attach Request message to the MME 30 via the eNB 20 (ST11 in Fig. 5). At this time, the UE 10 provides the index value of the periodic TAU timer to the Attach Request message and transmits the Attach Request message. For example, the UE 10 having a predetermined communication period (e.g., once a day) provides the communication period to the Attach Request message as the index value, as described above, and transmits the Attach Request message.

The MME 30 receives the Attach Request message. The MME 30 performs the procedure (the general Attach procedure) specified in Non Patent Literature 1 (ST12 in Fig. 5). In addition, the MME 30 evaluates whether or not the above-mentioned index value is provided to the Attach Request message (ST21 in Fig. 6). When the index value is not provided (ST21:NO in Fig. 6), the MME 30 sets the default value of the periodic TAU timer that is held therein to the setting value of the periodic TAU timer of the UE 10 (ST13 in Fig. 5 and ST24 in Fig. 6). The MME 30 provides this setting value to the Attach Accept message and transmits the Attach Accept message to the UE 10 (ST14 in Fig. 5).

Whereas when the index value is provided to the Attach Request message (ST21:Yes in Fig. 6), the MME 30 evaluates whether or not the index value is greater than the default value of the periodic TAU timer held by the MME 30 (ST13 in Fig. 5 and ST22 in Fig. 6). When the index value is shorter than the default value of the periodic TAU timer held by the MME 30 (ST13 in Fig. 5 and ST22:NO in Fig. 6), the MME 30 sets the default value of the periodic TAU timer held therein as the setting value of the periodic TAU timer of the UE 10 (ST13 in Fig. 5 and ST24 in Fig. 6). The MME 30 provides this setting value to the Attach Accept message and transmits the Attach Accept message to the UE 10 (ST14 in Fig. 5).

When the index value is shorter than the default value, by setting the default value of the periodic timer as the setting value of the periodic TAU timer of the UE 10, the MME 30 can prevent an increase in a transmission frequency of the location information by the UE 10. That is, even when communication is not performed according to the notified index value, the UE 10 waits for at least the time specified by the default value and then periodically performs the TAU procedure. Thus, it is possible to reduce a processing load of the MME 30 and network congestion.

Whereas when the index value is greater than the default value of the periodic TAU timer held by the MME 30 (ST13 in Fig. 5 and ST22:YES in Fig. 6), the MME 30 sets a time longer than or equal to the index value as the setting value of the periodic TAU timer of the UE 10 (ST13 in Fig. 5 and ST23 in Fig. 6).

When the index value is equal to the value of the communication period, the MME 30 sets a time longer than the index value as the setting value of the periodic TAU timer. When the index value is greater than the value of the communication period, the MME 30 sets a time longer than or equal to the index value to the setting value of the periodic TAU timer of the UE 10. That is, the MME 30 sets a time longer than the communication period of the UE 10 as the setting value of the periodic TAU timer of the UE 10.

The MME 30 provides this setting value to the Attach Accept message and transmits the Attach Accept message to the UE 10 (ST14 in Fig. 5).

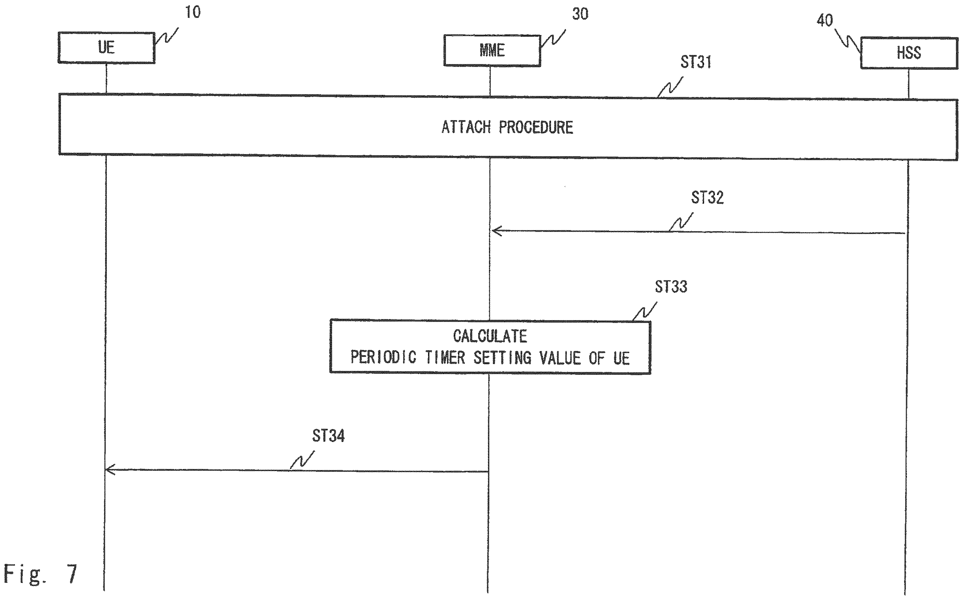

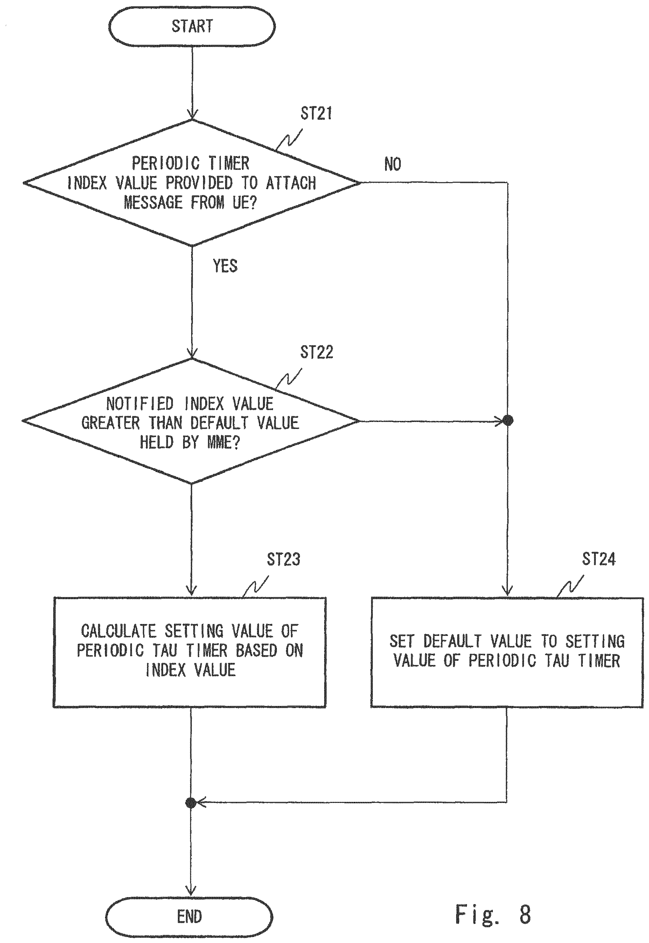

As mentioned above, the UE 10 may not transmit the above-mentioned index value to the MME 30 and instead the HSS 40 may transmit the index value of the UE 10 to the MME 30. The processing of the MME 30 and the HSS 40 in this case shall be explained with reference to Figs. 7 and 8. Fig. 7 is a sequence diagram showing a flow of the Attach procedure between the MME 30 and the HSS 40. Fig. 8 is a flowchart showing a flow of calculation processing of the transmission period of the location information by the MME 30.

The UE 10, the MME 30, and the HSS 40 perform the Attach procedure by the method defined in Non Patent Literature 1 (ST31 in Fig. 7).

The MME 30 obtains, from the HSS 40, the subscriber information of the UE 10 targeted by the Update Location Ack message (ST32 in Fig. 7). See Non Patent Literature 1 for the details of the Update Location Ack message, as appropriate.

At this time, when the above-mentioned index value is determined for the target UE 10, the HSS 40 provides the index value of the target UE 10 inside a normal message and transmits the message to the MME 30 (ST32 in Fig. 7).

The MME 30 evaluates whether or not the index value is set in the obtained subscriber information (ST41 in Fig. 8). When the index value is not provided (ST41:NO in Fig. 8), the MME 30 sets the default value of the periodic TAU timer that is held therein as the setting value of the periodic TAU timer of the UE 10 (ST33 in Fig. 7 and ST44 in Fig. 8). The MME 30 provides this setting value to the Attach Accept message and transmits the Attach Accept message to the UE 10 (ST34 in Fig. 7).

Whereas when the index value is provided inside the obtained subscriber information (ST41:Yes in Fig. 8), the MME 30 evaluates whether or not the index value is greater than the default value of the periodic TAU timer held by the MME 30 (ST33 in Fig. 7 and ST42 in Fig. 8). When the index value is shorter than the default value of the periodic TAU timer held by the MME 30 (ST33 in Fig. 7 and ST42:NO in Fig. 8), the MME 30 sets the default value of the periodic TAU timer held therein as the setting value of the periodic TAU timer of the UE 10 (ST33 in Fig. 7 and ST44 in Fig. 8). The MME 30 provides this setting value to the Attach Accept message and transmits the Attach Accept message to the UE 10 (ST34 in Fig. 7).

When the index value is shorter than the default value, by setting the default value of the periodic timer as the setting value of the periodic TAU timer of the UE 10, the MME 30 can prevent an increase in the transmission frequency of the location information by the UE 10. That is, even when communication is not performed according to the notified index value, the UE 10 waits for at least the time specified by the default value and then periodically performs the TAU procedure. Thus, it is possible to reduce a processing load of the MME 30 and network congestion.

Whereas when the index value is greater than the default value of the periodic TAU timer held by the MME 30 (ST33 in Fig. 7 and ST42:YES in Fig. 8), the MME 30 sets the setting value of the periodic TAU timer of the UE 10 according to the index value (ST33 in Fig. 7 and ST43 in Fig. 8). The MME 30 provides this setting value to the Attach Accept message and transmits the Attach Accept message to the UE 10 (ST34 in Fig. 7).

Next, an effect of the communication network system 1 according to this exemplary embodiment shall be explained. As described above, the MME 30 calculates the time longer than the communication period of the UE 10 as the value of the periodic TAU timer. Thus, when the communication period is predetermined, the UE 10 performs communication processing prior to transmission of the location information. In this case, in the UE 10, the counting processing of the periodic TAU timer is reset by the execution of the communication processing. Therefore the UE 10 completely stops the periodical TAU procedure. Thus execution of the TAU procedure of the UE 10 having a determined communication period will be completely stopped, thereby reducing a network load.

Although the present invention has been explained with reference to the exemplary embodiment, the present invention is not limited by the above. Various modifications obvious to those skilled in the art can be made to the configurations and details of the present invention within the scope of the invention.

For example, the TAU period providing unit 12 may not only set the index value based on the predetermined communication period, but also calculate the index value using past communication history. For example, the storage unit 15 stores the communication history. The TAU period providing unit 12 obtains the communication history from the storage unit 15 and calculates the longest communication period from the communication history. The TAU period providing unit 12 may provide the longest communication period to the Attach Request message as the index value. Even in this case, the MME 30 can set a larger setting value for the periodic TAU timer. Thus, it is possible to appropriately set the periodic TAU timer even for the UE 10 that does not move and rarely communicates (UE 10 having an undetermined communication period).

In the above first exemplary embodiment, although the LTE communication system has, as an example, been mainly explained, the present invention is not necessarily limited to the LTE. It is obvious that the present invention can be applied to a 3G wireless access system. In the 3G wireless access system, SGSN (Serving GPRS Support Node) corresponds to the above-mentioned MME 30, HLR (Home Location Register) corresponds to the above-mentioned HSS 40, RAU (Radio Access Unit) procedure corresponds to the above-mentioned TAU procedure, and RAU Accept corresponds to the above-mentioned TAU Accept.

Note that the processing of the respective processing units of the UE 10 (the TAU period providing unit 12, the analysis unit 13, and the location notifying unit 14), the respective processing units of the MME 30 (the analysis unit 33 and the location notify period calculation unit 34), and the processing unit of the HSS 40 (the TAU period providing unit 43) can be realized by programs operating in a certain computer. The program can be stored and provided to a computer using any type of non-transitory computer readable media. Non-transitory computer readable media include any type of tangible storage media. Examples of non-transitory computer readable media include magnetic storage media (such as floppy disks, magnetic tapes, hard disk drives, etc.), optical magnetic storage media (e.g. magneto-optical disks), CD-ROM (compact disc read only memory), CD-R (compact disc recordable), CD-R/W (compact disc rewritable), and semiconductor memories (such as mask ROM, PROM (programmable ROM), EPROM (erasable PROM), flash ROM, RAM (random access memory), etc.). The program may be provided to a computer using any type of transitory computer readable media. Examples of transitory computer readable media include electric signals, optical signals, and electromagnetic waves. Transitory computer readable media can provide the program to a computer via a wired communication line (e.g. electric wires, and optical fibers) or a wireless communication line.

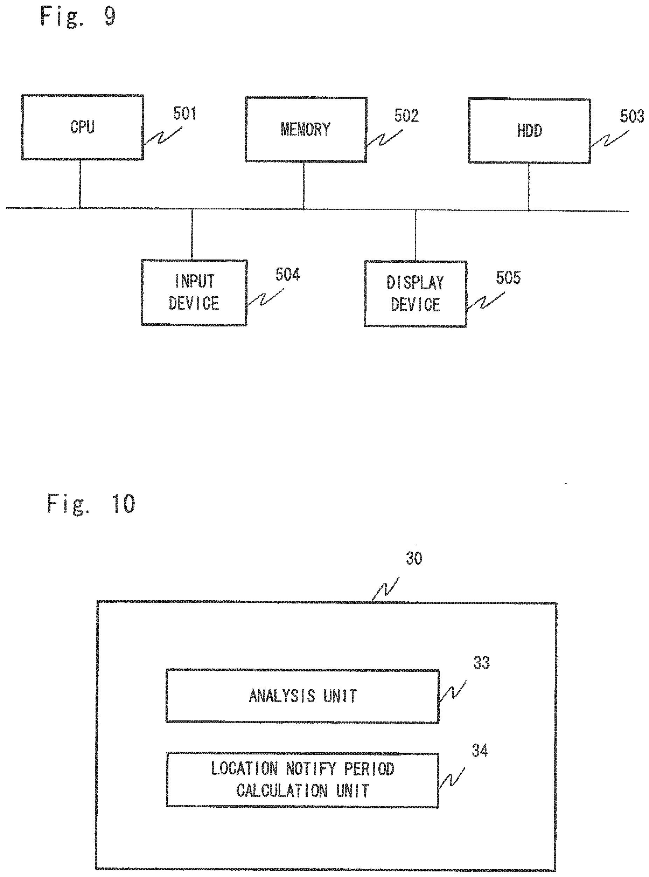

Fig. 9 shows an example of a hardware configuration of a computer system that realizes the processing of the respective processing units of the UE 10 (the TAU period providing unit 12, the analysis unit 13, and the location notifying unit 14), the respective processing units of the MME 30 (the analysis unit 33 and the location notify period calculation unit 34) or the processing unit of the HSS 40 (the TAU period providing unit 43). This system includes, for example, a central processing unit (CPU) 501 and a memory 502. The CPU 501 and the memory 502 are connected to a hard disk drive (HDD) 503, which is an auxiliary storage unit, via a bus. This system typically includes a user interface hardware. As the user interface hardware, there are, for example, an input device 504, such as a pointing device (a mouse, a joy stick, etc.) and a keyboard for an input and a display device 505, such as a liquid crystal display for presenting visual data to a user. A computer program, which provides instructions to the CPU 501 and the like in collaboration with an operation system and performs the functions of the respective units of this system, may be stored to a storage medium, such as the hard disk drive 503.

The nature of the present invention shall be explained again with reference to Fig. 10. Fig. 10 is a block diagram showing only the components that performs essential processing of the MME 30 according to the present invention. The MME 30 includes the analysis unit 33 and the location notify period calculation unit 34.

The analysis unit 33 analyzes the message (Attach message) transmitted from the UE 10. The analysis unit 33 obtains the index value provided to the message. The index value is information that is set greater than or equal to the communication period of the terminal device.

The location notify period calculation unit 34 calculates a setting time of the period for the UE 10 to transmit the location information to be longer than the communication period based in the index value obtained by the analysis unit 33. When the communication period is, for example, 24 hours, the location notify period calculation unit 34 sets the transmission period of the location information to 24 hours and 30 minutes.

Such a configuration also makes it possible to suppress periodical transmission of the location information by the UE 10 and reduce the network load.

The whole or part of the exemplary embodiments disclosed above can be described as, but not limited to, the following supplementary notes.

(Supplementary note 1) A processing device comprising:
an analysis unit that obtains an index value from a message transmitted from a terminal device, the index value being set to a time longer than or equal to a communication period of the terminal device; and
a location notify period calculation unit that calculates, based on the index value, a setting time of a period for the terminal device to transmit location information to be longer than the communication period.

(Supplementary note 2) The processing device according to Supplementary note 1, wherein when the index value is less than or equal to a predetermined threshold, the location registration period calculation unit sets the threshold as the setting time.

(Supplementary note 3) The processing device according to Supplementary note 1 or 2, wherein the index value is a value equal to the communication period.

(Supplementary note 4) The processing device according to any one of Supplementary notes 1 to 3, wherein the communication period is calculated based on communication history of the terminal device.

(Supplementary note 5) The processing device according to any one of Supplementary notes 1 to 4, wherein the processing device is a mobility management device.

(Supplementary note 6) A communication system comprising a terminal device and a processing device, wherein
the terminal device comprises transceiver means that includes an index value in a registration message, notifies the processing device of the registration message, and receives a setting time of a period to transmit location information, the index value being set greater than or equal to the communication period of a local terminal; and
location registration means that periodically registers location information of the local terminal based on the setting time, and the processing device comprises:
analysis means that obtains the index value from the registration message; and
location notify period calculation means that calculates, based on the index value, the setting time of the period for the terminal device to transmit the location information to be a value greater than the communication period;

(Supplementary note 7) The communication system according to Supplementary note 6, wherein when the index value is less than or equal to a predetermined threshold, the location registration period calculation unit sets the threshold as the setting time.

(Supplementary note 8) The processing device according to Supplementary note 6 or 7, wherein the index value is a value equal to the communication period.

(Supplementary note 9) The processing device according to any one of Supplementary notes 6 to 8, wherein the communication period is calculated based on communication history of the terminal device.

(Supplementary note 10) A communication terminal comprising:
a transceiver unit that notifies a mobility management device of an index value and receives a setting time of a period to transmit location information from the mobility management device, the index value being set to a time longer than or equal to a communication period of a local terminal; and
a location registration unit that periodically registers, based on the setting time, the location information of the local terminal with the mobility management device,
wherein the setting time is a time longer than the index value.

(Supplementary note 11) The communication terminal according to Supplementary note 10, wherein the index value is a value equal to the communication period.

(Supplementary note 12) The processing device according to Supplementary notes 10 or 11, wherein the communication period is calculated based on communication history of the terminal device.

(Supplementary note 13) A method for controlling a terminal device comprising:
obtaining information concerning a communication period of the terminal device; and
calculating a setting time of a period for the terminal device to transmit location information to be a value greater than the communication period.

(Supplementary note 14) A non-transitory computer readable medium storing a program for causing a computer to execute the method according to Supplementary note 13.

The present application claims priority rights of and is based on Japanese Patent Application No. 2011-216428 filed on Sep 30, 2011 in the Japanese Patent Office, the entire contents of which are hereby incorporated by reference.

### Reference Signs List

- 1: COMMUNICATION NETWORK SYSTEM
- 10: UE
- 11: Attach MESSAGE PROCESSING UNIT
- 12: TAU PERIOD PROVIDING UNIT
- 13: ANALYSIS UNIT
- 14: LOCATION REGISTRATION UNIT
- 15: STORAGE UNIT
- 20: BASE STATION (eNB)
- 30: MME (MOBILE MANAGEMENT ENTITY)
- 31: STORAGE UNIT
- 32: Attach MESSAGE TRANSCEIVER UNIT
- 33: ANALYSIS UNIT
- 34: LOCATION NOTIFY PERIOD CALCULATION UNIT
- 40: HSS (HOME SUBSCRIBER SERVER)
- 41: STORAGE UNIT
- 42: Attach MESSAGE TRANSCEIVER UNIT
- 43: TAU PERIOD PROVIDING UNIT
- 501: CENTRAL PROCESSING UNIT (CPU)
- 502: MEMORY
- 503: HARD DISK DRIVE (HDD)
- 504: INPUT DEVICE
- 505: DISPLAY DEVICE

## Claims

1. A processing device comprising:
analysis means (33) configured to obtain an index value from a message transmitted from a terminal device (10), the index value being set to a time longer than or equal to a communication period of the terminal device (10); and
location notify period calculation means (34) configured to calculate, based on the index value, a setting time of a period for the terminal device (10) to transmit location information to be longer than the communication period.

2. The processing device according to Claim 1, wherein when the index value is less than or equal to a predetermined threshold, the location registration period calculation means (34) is configured to set the threshold as the setting time.

3. The processing device according to Claim 1 or 2, wherein the index value is a value equal to the communication period.

4. The processing device according to any one of Claims 1 to 3, wherein the communication period is calculated based on communication history of the terminal device (10).

5. The processing device according to any one of Claims 1 to 4, wherein the processing device is a mobility management device (30).

6. A communication system (1) comprising a terminal device (10) and a processing device, wherein the terminal device (10) comprises
transceiver means configured to: include an index value in a registration message, notify the processing device of the registration message, and receive a setting time of a period to transmit location information, the index value being set greater than or equal to the communication period of a local terminal; and
location registration means configured to periodically register location information of the local terminal based on the setting time, and
wherein the processing device comprises:
analysis means (33) configured to obtain the index value from the registration message; and
location notify period calculation means (34) configured to calculate, based on the index value, the setting time of the period for the terminal device to transmit the location information to be a value greater than the communication period;

7. The communication system according to Claim 6, wherein when the index value is less than or equal to a predetermined threshold, the location registration period calculation means is configured to set the threshold as the setting time.

8. A communication terminal (10) comprising:
transceiver means configured to notify a mobility management device (30) of an index value and to receive a setting time of a period to transmit location information from the mobility management device (30), the index value being set to a time longer than or equal to a communication period of a local terminal; and
location registration means configured to periodically register, based on the setting time, the location information of the local terminal with the mobility management device,
wherein the setting time is a time longer than the index value.

9. A method for controlling a terminal device comprising:
obtaining (ST 21) an index value from a message transmitted from a terminal device, the index value being set (ST 22) to a time longer than or equal to a communication period of the terminal device; and
calculating (ST 23), based on the index value, a setting time of a period for the terminal device to transmit location information to be a value greater than the communication period.

10. A non-transitory computer readable medium storing a program for causing a computer to execute the method according to Claim 9.

## Patentansprüche

1. Verarbeitungsvorrichtung, umfassend:
Analysemittel (33), das konfiguriert ist zum Erhalten eines Indexwerts aus einer von einem Endgerät (10) übermittelten Nachricht, wobei der Indexwert auf eine Zeit eingestellt wird, die länger oder gleich einer Kommunikationsperiode des Endgeräts (10) ist; und
Ort-Benachrichtigungszeitraumberechnungsmittel (34), das das konfiguriert ist um basierend auf dem Indexwert eine Einstellzeit einer Periode für das Endgerät (10) zu berechnen, um Standortinformationen zu übertragen, die länger sind als die Kommunikationsperiode.

2. Verarbeitungsvorrichtung gemäß Anspruch 1, wobei, wenn der Indexwert kleiner oder gleich einem vorbestimmten Schwellenwert ist, die Mittel (34) zur Berechnung der Ortsregistrierungsperiode konfiguriert sind den Schwellenwert als Aushärtungszeit festzulegen.

3. Verarbeitungsvorrichtung gemäß Anspruch 1 oder 2, wobei der Indexwert ein Wert ist, der der Kommunikationsperiode entspricht.

4. Verarbeitungsvorrichtung nach einem der Ansprüche 1 bis 3, wobei die Kommunikationsperiode auf der Grundlage der Kommunikationshistorie des Endgeräts (10) berechnet wird.

5. Verarbeitungsvorrichtung nach einem der Ansprüche 1 bis 4, wobei die Verarbeitungsvorrichtung eine Mobilitätsmanagementvorrichtung (30) ist.

6. Kommunikationssystem (1) mit einer Endeinrichtung (10) und einer Verarbeitungseinrichtung, wobei
die Endeinrichtung (10) umfasst
Transceivermittel, die konfiguriert sind zum:
Einschließen eines Indexwerts in einer Registrierungsnachricht,
Informieren derVerarbeitungseinrichtung über die Registrierungsnachricht und
Empfangen einer eine Einstellzeit einer Periode zum Übertragen von Ortsinformationen, wobei der Indexwert größer oder gleich der Kommunikationsperiode eines lokalen Endgeräts eingestellt wird; und
Ortsregistrierungsmittel, die konfiguriert sind zum: periodischen Registrieren von Ortsinformationen des lokalen Terminals auf der Grundlage der Einstellzeit und
wobei die Verarbeitungsvorrichtung umfasst:
Analysemittel (33), das konfiguriert ist um den Indexwert aus der Registrierungsnachricht zu erhalten; und
Mittel (34) zur Berechnung der Ortsbenachrichtigungsperiode, das konfiguriert ist, um basierend auf dem Indexwert die Einstellzeit der Periode zu berechnen, während der das Endgerät die Ortsinformation überträgt, und zwar als einen Wert größer als die Kommunikationsperiode.

7. Kommunikationssystem gemäß Anspruch 6, wobei, wenn der Indexwert kleiner oder gleich einem vorbestimmten Schwellenwert ist, die Ortsregistrierungsperiodeberechnungseinrichtung konfiguriert is, den Schwellenwert als Einstellzeit festzulegen.

8. Kommunikationsendgerät (10), umfassend:
Sendeempfängermittel, die konfiguriert sind, um eine Mobilitätsmanagementvorrichtung (30) über einen Indexwert zu benachrichtigen und eine Einstellzeit einer Periode zu empfangen, um Ortsinformationen von der Mobilitätsmanagementvorrichtung (30) zu übertragen, wobei der Indexwert auf eine Zeit eingestellt wird, die länger oder gleich einer Kommunikationsperiode eines lokalen Endgeräts ist; und
Ortsregistrierungsmittel, die konfiguriert sind, um die Ortsinformation des lokalen Terminals mit dem Mobilitätsmanagementgerät anhand der Einstellzeit periodisch zu registrieren,
wobei die Einstellzeit eine Zeit ist, die länger ist als der Indexwert.

9. Verfahren zur Steuerung einer Endeinrichtung, umfassend:
Erhalten (ST 21) eines Indexwerts aus einer von einem Endgerät übermittelten Nachricht , wobei der Indexwert (ST 22) auf eine Zeit eingestellt ist, die länger oder gleich einer Kommunikationsperiode des Endgeräts ist; und
Berechnen (ST 23), basierend auf dem Indexwert, einer Einstellzeit eines Zeitraums, in dem das Endgerät Standortinformationen übertragen soll, auf einen Wert größer als die Kommunikationsperiode.

10. Nicht-transitorisches rechnerlesbares Medium, auf dem ein Programm gespeichert ist, das einen Computer veranlasst, das Verfahren gemäß Anspruch 9 auszuführen.

## Revendications

1. Dispositif de traitement comprenant :
un moyen d'analyse (33) configuré pour obtenir une valeur d'indice d'un message transmis depuis un dispositif terminal (10), la valeur d'indice étant réglée à un temps plus long que ou égal à une période de communication du dispositif terminal (10) ; et
un moyen de calcul de période de notification de localisation (34) configuré pour calculer, d'après la valeur d'indice, un temps de réglage d'une période pour que le dispositif terminal (10) transmette des informations de localisation pour qu'elle soit plus longue que la période de communication.

2. Dispositif de traitement selon la revendication 1, dans lequel lorsque la valeur d'indice est inférieure ou égale à un seuil prédéterminé, le moyen de calcul de période d'enregistrement de localisation (34) est configuré pour régler le seuil en tant que temps de réglage.

3. Dispositif de traitement selon la revendication 1 ou 2, dans lequel la valeur d'indice est une valeur égale à la période de communication.

4. Dispositif de traitement selon l'une quelconque des revendications 1 à 3, dans lequel la période de communication est calculée d'après un historique de communication du dispositif terminal (10).

5. Dispositif de traitement selon l'une quelconque des revendications 1 à 4, dans lequel le dispositif de traitement est un dispositif de gestion de mobilité (30).

6. Système de communication (1) comprenant un dispositif terminal (10) et un dispositif de traitement, dans lequel le dispositif terminal (10) comprend
un moyen émetteur-récepteur configuré pour :
inclure une valeur d'indice dans un message d'enregistrement, notifier le dispositif de traitement du message d'enregistrement, et recevoir un temps de réglage d'une période pour transmettre des informations de localisation, la valeur d'indice étant réglée supérieure ou égale à la période de communication d'un terminal local ; et
un moyen d'enregistrement de localisation configuré pour enregistrer périodiquement les informations de localisation du terminal local d'après le temps de réglage, et
dans lequel le dispositif de traitement comprend :
un moyen d'analyse (33) configuré pour obtenir la valeur d'indice du message d'enregistrement ; et
un moyen de calcul de période de notification de localisation (34) configuré pour calculer, d'après la valeur d'indice, le temps de réglage de la période pour que le dispositif terminal transmette des informations de localisation pour qu'elle soit une valeur supérieure à la période de communication.

7. Système de communication selon la revendication 6, dans lequel lorsque la valeur d'indice est inférieure ou égale à un seuil prédéterminé, le moyen de calcul de période d'enregistrement de localisation est configuré pour régler le seuil en tant que temps de réglage.

8. Terminal de communication (10) comprenant :
un moyen émetteur-récepteur configuré pour notifier un dispositif de gestion de mobilité (30) d'une valeur d'indice et pour recevoir un temps de réglage d'une période pour transmettre des informations de localisation depuis le dispositif de gestion de mobilité (30), la valeur d'indice étant réglée à un temps plus long que ou égal à une période de communication d'un terminal local ; et
un moyen d'enregistrement de localisation configuré pour enregistrer périodiquement, d'après le temps de réglage, les informations de localisation du terminal local avec le dispositif de gestion de mobilité,
dans lequel le temps de réglage est un temps plus long que la valeur d'indice.

9. Procédé de commande d'un dispositif terminal comprenant :
l'obtention (ST 21) d'une valeur d'indice d'un message transmis depuis un dispositif terminal, la valeur d'indice étant réglée (ST 22) à un temps plus long que ou égal à une période de communication du dispositif terminal ; et
le calcul (ST 23), d'après la valeur d'indice, d'un temps de réglage d'une période pour que le dispositif terminal transmette des informations de localisation pour qu'elle soit une valeur supérieure à la période de communication.

10. Support lisible par ordinateur non transitoire stockant un programme pour amener un ordinateur à exécuter le procédé selon la revendication 9.
